# EUROPEAN PATENT APPLICATION

(11) **EP 4 564 937 A1**
(43) Date of publication of application: **04.06.2025**
(21) Application number: 23870258.3
(22) Date of filing: 08.09.2023
(51) Int. Cl.: H04W 52/02

(54) **ENERGY-SAVING METHOD AND APPARATUS**

(30) Priority: 29.09.2022 CN 202211204860
(71) Applicant: Huawei Technologies Co., Ltd., Shenzhen, Guangdong 518129 (CN)
(72) Inventor: LUO, Qilin, Shenzhen, Guangdong 518129 (CN); XIONG, Jing, Shenzhen, Guangdong 518129 (CN); FENG, Bo, Shenzhen, Guangdong 518129 (CN); BAI, Quan, Shenzhen, Guangdong 518129 (CN); XU, Hao, Shenzhen, Guangdong 518129 (CN); XIE, Yanghao, Shenzhen, Guangdong 518129 (CN)
(74) Representative: Maiwald GmbH
(86) International application number: PCT/CN2023/117664
(87) International publication number: WO 2024/067019

(57) **Abstract**

An energy-saving method and an apparatus are provided. The method can resolve problems such as high operating expense of an access network device. The method includes: The access network device includes a monitoring radio frequency unit and a non-monitoring radio frequency unit. **In** an initial phase, the non-monitoring radio frequency unit operates in sleep state. Non-monitoring radio frequency unit is woken up as required. For example, the non-monitoring radio frequency unit is woken up only when a moving terminal device exists within a service range of the non-monitoring radio frequency unit. When a moving terminal device does not exist within a service range of the non-monitoring radio frequency unit, the non-monitoring radio frequency unit is kept operating in sleep state, to implement adaptive energy saving of the non-monitoring radio frequency unit in the access network device, and reduce operating expense of the access network device.

## Description

### CROSS-REFERENCE TO RELATED APPLICATIONS

This application claims priority to Chinese Patent Application No. 202211204860.8, filed with the China National Intellectual Property Administration on September 29, 2022 and entitled "ENERGY-SAVING METHOD AND APPARATUS", which is incorporated herein by reference in its entirety.

### TECHNICAL FIELD

Embodiments of this application relate to the field of communication technologies, and in particular, to an energy-saving method and an apparatus.

### BACKGROUND

With increasing wireless services, a network scale increasingly expands, and device energy consumption increases. High energy consumption of a radio access network device gradually becomes one of main reasons for high operating expense (operating expense, OPEX) of an operator. Reducing running energy consumption of an access network device to reduce the OPEX of the operator is a current research direction.

### SUMMARY

Embodiments of this application provide an energy-saving method and an apparatus, to reduce energy consumption of an access network device, thereby reducing operating expense of an operator.

According to a first aspect, an energy-saving method is provided, where the method is applied to a baseband unit, and an executor of the method is the baseband unit or a component (a processor, a chip, or another component) in the baseband unit, and includes: determining, based on a first received detection signal, whether a moving object exists within a service range of a first radio frequency unit. If the moving object exists within the service range of the first radio frequency unit, the first radio frequency unit operates in wake-up state; or if the moving object does not exist within the service range of the first radio frequency unit and the first radio frequency unit is a non-monitoring radio frequency unit, the first radio frequency unit operates in sleep state; or if the moving object does not exist within the service range of the first radio frequency unit and the first radio frequency unit is a monitoring radio frequency unit, the first radio frequency unit operates in wake-up state. The monitoring radio frequency unit operates in wake-up state in an initial phase of a first period of time, and the non-monitoring radio frequency unit operates in sleep state in the initial phase of the first period of time.

According to the foregoing design, a radio frequency unit of an access network device includes the first radio frequency unit operating in wake-up state. If the moving object is detected within the service range of the first radio frequency unit, the first radio frequency unit continues to operate in wake-up state. If the moving object is not detected within the service range of the first radio frequency unit and the first radio frequency unit is the non-monitoring radio frequency unit, the first radio frequency unit switches to a sleep state, and the radio frequency unit adaptively saves energy as required, to implement maximum energy saving of the access network device.

In a design, that the first radio frequency unit operates in wake-up state includes: starting or restarting a timer of the first radio frequency unit, where during running of the timer of the first radio frequency unit, the first radio frequency unit operates in wake-up state.

According to the foregoing design, a timer is set for a radio frequency unit operating in wake-up state, and during running of the timer, a corresponding radio frequency unit operates in wake-up state. After the timer expires, the corresponding radio frequency unit automatically switches to a sleep state. According to the foregoing design, when a radio frequency unit is woken up, the radio frequency unit that is woken up automatically switches to a sleep state after a timer expires. This further implements energy saving of the radio frequency unit.

In a design, when the first radio frequency unit operates in wake-up state, the method further includes: waking up a radio frequency unit in sleep state in a neighboring radio frequency unit of the first radio frequency unit; and starting or restarting a timer of the woken-up neighboring radio frequency unit, where during running of the timer of the neighboring radio frequency unit, the neighboring radio frequency unit operates in wake-up state.

According to the foregoing design, when the first radio frequency unit is woken up, the neighboring radio frequency unit of the first radio frequency unit is further woken up. This is mainly because: When a user is located within the service range of the first radio frequency unit, as the user moves, it is probably that the user enters a service range of the neighboring radio frequency unit of the first radio frequency unit, and the neighboring radio frequency unit of the first radio frequency unit is woken up in advance, to avoid a problem that when the user moves to the service range of the neighboring radio frequency unit, the neighboring radio frequency unit operates in sleep state and cannot provide a service, to provide service experience of the user.

In a design, that the first radio frequency unit operates in sleep state includes: After the timer of the first radio frequency unit expires, the first radio frequency unit operates in sleep state.

In a design, the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

According to the foregoing design, one radio frequency unit in the access network device sends a detection signal, and the other radio frequency unit receives the detection signal. Alternatively, one antenna connected to one radio frequency unit in the access network device sends a detection signal, and the other antenna connected to the same radio frequency unit receives the detection signal. The received detection signal may be referred to as the first received detection signal, and a propagation range of the first received detection signal in an air interface may be considered as a service range of the radio frequency unit. Subsequent radar processing is performed on the first received detection signal, and it can be determined whether a moving object exists within the service range of the radio frequency unit, that is, within the propagation range of the detection signal in the air interface. When the moving object serves as a user, a terminal device held by the moving object may be in connected state, idle state, sleep state, or the like. According to the foregoing method, whether a terminal device exists within the service range of the radio frequency unit can be accurately detected, so that a precise energy-saving operation is implemented for a corresponding radio frequency unit based on the detection result.

**In** a design, the determining, based on a first received detection signal, whether a moving object exists within a service range of a first radio frequency unit includes: determining, based on the first received detection signal, whether a Doppler shift signal caused by the moving object exists; and if the Doppler shift signal caused by the moving object exists, determining that the moving object exists within the service range of the first radio frequency unit; or if the Doppler shift signal caused by the moving object does not exist, determining that the moving object does not exist within the service range of the first radio frequency unit.

According to the foregoing design, radar processing is performed on the detection signal received by the radio frequency unit, that is, the first received detection signal, and it can be determined whether the moving object exists within the service range of the radio frequency unit. Further, when the moving object is detected, the first radio frequency unit operates in wake-up state, to ensure that the first radio frequency unit provides a network service for a terminal of the moving object when the terminal needs the service.

**In** a design, no terminal device in connected state exists within the service range of the first radio frequency unit.

According to the foregoing design, the method in the first aspect may be directly used to perform an energy-saving operation. Alternatively, it may be first determined whether the terminal in connected state exists within the service range of the first radio frequency unit. When no terminal in connected state exists, it is determined, based on the first received detection signal, whether the moving object exists within the service range of the first radio frequency unit and another operation. Because a process of detecting the terminal in connected state is simple, there are numerous implementations. When a terminal in connected state exists within a service range of a radio frequency unit, the radio frequency unit may be directly kept operating in wake-up state, and no radar-related detection operation in the first aspect needs to be performed, to further reduce energy consumption of the access network device.

According to a second aspect, a moving object detection method is provided, where the method is applied to a baseband processing unit, and an executor of the method is a baseband unit or a component (a processor, a chip, or another component) in the baseband unit, and includes: determining, based on a first received detection signal, whether a moving object exists within a service range of a first radio frequency unit, where the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

According to the foregoing design, it may be determined whether the moving object exists within the service range of the first radio frequency unit. **In** addition, the moving object is a user of a terminal device, and a state of the terminal device may be a connected state, an idle state, an inactive state, or the like, to accurately detect whether a terminal device exists within a service range of a radio frequency unit.

**In** a design, the determining, based on a first received detection signal, whether a moving object exists within a service range of a first radio frequency unit includes: determining, based on the first received detection signal, whether a Doppler shift signal caused by the moving object exists; and if the Doppler shift signal caused by the moving object exists, determining that the moving object exists within the service range of the first radio frequency unit; or if the Doppler shift signal caused by the moving object does not exist, determining that the moving object does not exist within the service range of the first radio frequency unit.

According to the foregoing design, radar processing is performed on the detection signal received by the radio frequency unit, that is, the first received detection signal, and it can be determined whether the moving object exists within the service range of the radio frequency unit. When the moving object is the user of the terminal device, whether a terminal device exists within the service range of the radio frequency unit can be detected. The service range of the radio frequency unit may be considered as a propagation range of the received detection signal in an air interface.

According to a third aspect, an apparatus is provided. The apparatus may be a baseband unit, or a component configured in the baseband unit.

For example, the apparatus includes units that are in one-to-one correspondence with the methods/operations/steps/actions described in the first aspect. The units may be implemented by using a hardware circuit, software, or a combination of the hardware circuit and the software.

For example, the apparatus includes a processing unit, and the processing unit may perform a corresponding function in any design in the first aspect. To be specific,
the processing unit is configured to determine, based on a first received detection signal, whether a moving object exists within a service range of a first radio frequency unit. If the moving object exists within the service range of the first radio frequency unit, the first radio frequency unit operates in wake-up state; or if the moving object does not exist within the service range of the first radio frequency unit and the first radio frequency unit is a non-monitoring radio frequency unit, the first radio frequency unit operates in sleep state; or if the moving object does not exist within the service range of the first radio frequency unit and the first radio frequency unit is a monitoring radio frequency unit, the first radio frequency unit operates in wake-up state. The monitoring radio frequency unit operates in wake-up state in an initial phase of a first period of time, and the non-monitoring radio frequency unit operates in sleep state in the initial phase of the first period of time.

Optionally, the apparatus further includes a transceiver unit. The transceiver unit is configured to receive the first received detection signal from the radio frequency unit.

For specific execution processes of the processing unit and the communication unit, refer to the first aspect. Details are not described herein again.

Alternatively, the apparatus includes a processor, configured to implement the method in the first aspect. The apparatus may further include a memory, configured to store instructions and/or data. The processor is coupled to the memory, and the processor executes the program instructions stored in the memory, to implement the method in the first aspect. The apparatus may further include a communication interface. The communication interface is used by the apparatus to communicate with another device. The communication interface may be a transceiver, a circuit, a bus, a module, a pin, or a communication interface of another type. **In** a possible design, the apparatus includes:
a memory, configured to store program instructions; and
a processor, configured to determine, based on a first received detection signal, whether a moving object exists within a service range of a first radio frequency unit. If the moving object exists within the service range of the first radio frequency unit, the first radio frequency unit operates in wake-up state; or if the moving object does not exist within the service range of the first radio frequency unit and the first radio frequency unit is a non-monitoring radio frequency unit, the first radio frequency unit operates in sleep state; or if the moving object does not exist within the service range of the first radio frequency unit and the first radio frequency unit is a monitoring radio frequency unit, the first radio frequency unit operates in wake-up state. The monitoring radio frequency unit operates in wake-up state in an initial phase of a first period of time, and the non-monitoring radio frequency unit operates in sleep state in the initial phase of the first period of time.

Optionally, a communication interface is configured to receive the first received detection signal from the radio frequency unit.

For specific execution processes of the communication interface and the processor, refer to the first aspect. Details are not described herein again.

According to a fourth aspect, an apparatus is provided. The apparatus may be a baseband unit, or a component configured in the baseband unit.

For example, the apparatus includes units that are in one-to-one correspondence with the methods/operations/steps/actions described in the second aspect. The units may be implemented by using a hardware circuit, software, or a combination of the hardware circuit and the software.

For example, the apparatus includes a processing unit, and the processing unit may perform a corresponding function in any design in the second aspect. To be specific,
the processing unit is configured to determine, based on a first received detection signal, whether a moving object exists within a service range of a first radio frequency unit, where the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

Optionally, the apparatus further includes a communication unit, configured to receive the first received detection signal from the radio frequency unit.

For specific execution processes of the processing unit and the communication unit, refer to the second aspect. Details are not described herein again.

Alternatively, the apparatus includes a processor, configured to implement the method described in the second aspect. The apparatus may further include a memory, configured to store instructions and/or data. The processor is coupled to the memory, and the processor executes the program instructions stored in the memory, to implement the method in the second aspect. The apparatus may further include a communication interface. The communication interface is used by the apparatus to communicate with another device. The communication interface may be a transceiver, a circuit, a bus, a module, a pin, or a communication interface of another type. In a possible design, the apparatus includes:
a memory, configured to store program instructions; and
a processor, configured to determine, based on a first received detection signal, whether a moving object exists within a service range of a first radio frequency unit, where the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

Optionally, a communication interface is configured to receive the first received detection signal from the radio frequency unit.

For specific execution processes of the communication interface and the processor, refer to the second aspect. Details are not described herein again.

According to a fifth aspect, a computer-readable storage medium is provided, and includes instructions. When the instructions are run on a computer, the computer is enabled to perform the method in the first aspect or the second aspect.

According to a sixth aspect, a chip system is provided. The chip system includes a processor, and may further include a memory, configured to implement the method in the first aspect or the second aspect. The chip system may include a chip, or may include a chip and another discrete component.

According to a seventh aspect, a computer program product is provided, and includes instructions. When the instructions are run on a computer, the computer is enabled to perform the method in the first aspect or the second aspect.

According to an eighth aspect, a system is further provided. The system includes a radio frequency unit and the apparatus according to the first aspect or the second aspect.

### BRIEF DESCRIPTION OF DRAWINGS

FIG. 1 is a diagram of a communication system according to this disclosure;
FIG. 2 is a diagram of a three-layer architecture of an access network device according to this disclosure;
FIG. 3 is a diagram of an architecture of an O-RAN according to this disclosure;
FIG. 4 is another diagram of an architecture of an O-RAN according to this disclosure;
FIG. 5 is a flowchart of an energy-saving method according to this disclosure;
FIG. 6a is a diagram of a detection signal according to this disclosure;
FIG. 6b is another diagram of a detection signal according to this disclosure;
FIG. 7A and FIG. 7B are a diagram of a monitoring radio frequency unit and a non-monitoring radio frequency unit according to this disclosure;
FIG. 8 is a diagram of distribution of a radio frequency unit operating in wake-up state and a radio frequency unit operating in sleep state according to this disclosure;
FIG. 9 is a flowchart of moving object detection according to this disclosure;
FIG. 10 is a diagram of radar detection according to this disclosure;
FIG. 11 is a diagram of a structure of an apparatus according to this disclosure; and
FIG. 12 is another diagram of a structure of an apparatus according to this disclosure.

### DESCRIPTION OF EMBODIMENTS

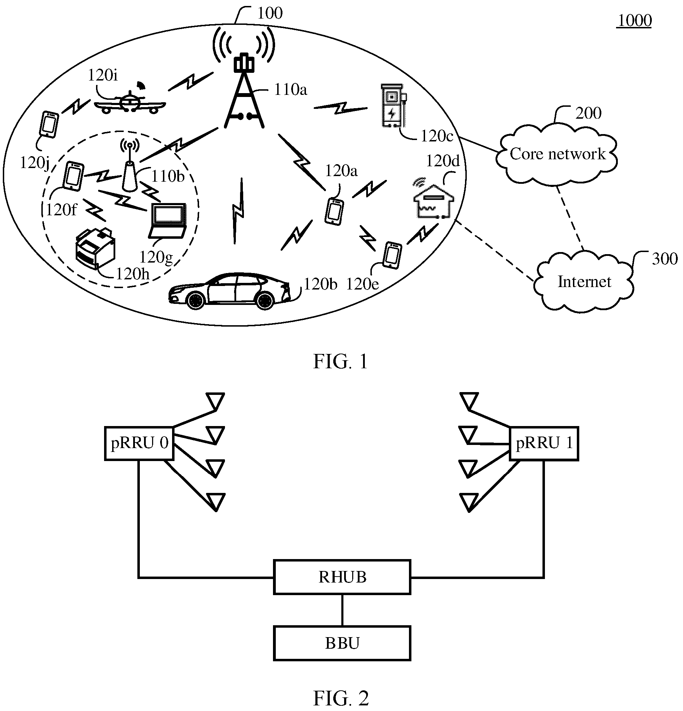

FIG. 1 is a diagram of an architecture of a communication system 1000 to which this disclosure is applicable. As shown in FIG. 1, the communication system 1000 includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, functions of a core network device and logical functions of the access network device may be integrated into a same physical device, or a part of functions of a core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this disclosure.

The terminal device may be referred to as a terminal, user equipment (user equipment, UE), a mobile station, a moving terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), an internet of things (internet of things, IoT), virtual reality, augmented reality, industrial control, self-driving, telemedicine, a smart grid, smart furniture, smart office, smart wear, smart transportation, or a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in this disclosure.

The access network device and the terminal device may be at fixed positions, or may be movable. The access network device and/or terminal device may be deployed on land, including indoors or outdoors, or in a handheld manner or a vehicle-mounted manner, may be deployed on water, or may be deployed on an airplane, a balloon, or a man-made satellite in the air. Application scenarios of the access network device and the terminal device are not limited in this disclosure. The access network device and the terminal device may be deployed in a same scenario or different scenarios. For example, the access network device and the terminal device are both deployed on land; or the access network device is deployed on land, and the terminal device is deployed on water. Examples are not provided one by one.

Roles of the access network device and the terminal device may be relative. For example, a helicopter or an uncrewed aerial vehicle 120i in FIG. 1 may be configured as a mobile access network device. For the terminal device 120j that accesses the radio access network 100 via 120i, the terminal device 120i is an access network device. However, for the access network device 110a, 120i is a terminal device, that is, 110a and 120i communicate with each other by using a radio air interface protocol. Alternatively, 110a and 120i communicate with each other by using an interface protocol between the access network devices. In this case, for 110a, 120i is also an access network device. Therefore, both the access network device and the terminal device may be collectively referred to as communication apparatuses. 110a and 110b in FIG. 1 may be referred to as communication apparatuses having a function of the access network device, and 120a to 120j in FIG. 1 may be referred to as communication apparatuses having a function of the terminal device.

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

In different scenarios, the access network device has different structures. A structure of the access network device is described as an example.

### 1. Baseband unit and radio frequency unit

The access network device includes the baseband unit and the radio frequency unit. The baseband unit and the radio frequency unit may be physically disposed together, or may be physically separated, that is, a distributed access network device. An interface between the baseband unit and the radio frequency unit may be an optical interface, and data may be transmitted between the baseband unit and the radio frequency unit through an optical fiber.

The baseband unit is mainly configured to: process a baseband signal, control the access network device, and the like. Processing of the baseband signal includes one or more of the following: channel coding, multiplexing, modulation, spectrum spreading, amplitude limitation on power of a carrier, or the like. For example, the baseband unit includes one or more units. A plurality of units may jointly support a radio access network of a single access standard, or support radio access networks of different access standards.

The radio frequency unit is mainly configured to: receive and send a radio frequency signal, and convert the radio frequency signal and the baseband signal. An operating principle of the radio frequency unit is to perform frequency translation, filtering, and amplification on the baseband signal in a downlink manner, and then send the baseband signal to an antenna feeder by transmitting and filtering the baseband signal. Optionally, the radio frequency unit may also implement a part of baseband functions, for example, including one or more of the following: fast Fourier transform (fast Fourier transform, FFT) transform/inverse fast Fourier transform (inverse fast Fourier transformation, iFFT) transform, beamforming, or the like.

In this disclosure, the structure of the access network device is not limited. For example, the structure of the access network device is a baseband unit (baseband unit, BBU), a remote radio unit (remote radio unit, RRU), and an antenna of an outdoor macro base station, or a BBU and an active antenna unit (active antenna unit, AAU). Alternatively, the structure of the access network device is a conventional indoor BBU, RRU, and distributed antenna, a new digital indoor BBU, remote radio unit hub (remote radio unit hub, RHUB), and pico remote radio unit (pico remote radio unit, pRRU), or the like. In the foregoing structures, the structure of the access network device may be summarized as the baseband unit (BBU) and the radio frequency unit (the AAU or the RRU), or the like.

As shown in FIG. 2, a three-layer structure of an access network device in an indoor coverage technology is described: a BBU, an RHUB, and a pRRU.

The BBU is a main component of a distributed access network device. The BBU mainly completes one or more of the following functions: baseband processing (such as channel coding/decoding, and modulation/demodulation) of a signal, transmission management providing and interface providing, wireless resource management, clock signal providing, or the like. A PBUB provides a convergence function of an interface between the BBU and the pPPRU, and supplies power remotely to the pRRU. The interface may be a common public interface (common public radio interface, CPRI) or another possible fronthaul interface. This is not limited. The pRRU is configured to process a radio frequency signal, and the like.

One BBU is connected to one or more PHUBs, and one PHUB is connected to one or more pRRUs. An operating process of the access network device includes: In downlink transmission, the BBU sends a downlink signal to the PHUB, and the PHUB is connected to the pRRU through a network cable. The PHUB distributes the downlink signal to each pRRU. Each pRRU processes the downlink signal into the radio frequency signal, and then makes the radio frequency signal access an indoor area through a transmission device such as a radio frequency feeder, a combiner/divider, or an antenna. In uplink transmission, an indoor terminal device sends an uplink signal to the pRRU. Each pRRU sends the uplink signal to the PHUB. The PHUB converges uplink signals and transmits the signals to the BBU.

### 2. Central unit (central unit, CU) and distributed unit (distributed unit, DU)

The access network device includes the CU and the DU. A plurality of DUs may be controlled by one CU. For example, an interface between the CU and the DU may be referred to as an F1 interface. A control plane (control plane, CP) interface may be F1-C, and a user plane (user plane, UP) interface may be F 1-U. A specific name of each interface is not limited in this disclosure. The CU and the DU may be divided based on protocol layers of a wireless network. For example, functions of a PDCP layer and a protocol layer above the PDCP layer are set on the CU, and functions of protocol layers (for example, an RLC layer and a MAC layer) below the PDCP layer are set on the DU. For another example, functions of protocol layers above a PDCP layer are set on the CU, and functions of the PDCP layer and protocol layers below the PDCP layer are set on the DU. This is not limited.

Division into processing functions of the CU and the DU based on the protocol layers is merely an example, and there may alternatively be another division manner. For example, the CU and the DU may be divided to have functions of more protocol layers. For another example, the CU and the DU may be further divided to have a part of processing functions of a protocol layer. In a design, a part of functions of an RLC layer and a function of a protocol layer above the RLC layer are set on the CU, and a remaining function of the RLC layer and a function of a protocol layer below the RLC layer are set on the DU. In another design, functions of the CU or the DU may alternatively be divided based on service types or other system requirements, for example, may be divided based on latencies. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement a higher-layer function of the PHY layer, and the RU may implement a lower-layer function of the PHY layer.

For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT) transform/inverse fast Fourier transform (inverse fast Fourier transformation, iFFT) transform, digital beamforming, extraction and filtering of a physical random access channel (physical random access channel, PRACH), or the like.

For another example, when sending is performed, a function of the PHY layer may include at least one of the following: cyclic redundancy check (cyclic redundancy check, CRC) code addition, channel coding, rate matching, scrambling, modulation, layer mapping, precoding, resource mapping, physical antenna mapping, or a radio frequency sending function. When receiving is performed, a function of the PHY layer may include at least one of the following: a CRC check, channel decoding, rate de-matching, descrambling, demodulation, layer demapping, channel detection, resource demapping, physical antenna demapping, or radio frequency receiving function. The higher-layer function of the PHY layer may include a part of the function of the PHY layer. For example, the part of the function is closer to the MAC layer. The lower-layer function of the PHY layer may include another part of the function of the PHY layer. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding. The lower-layer function of the PHY layer may include resource mapping, physical antenna mapping, and radio frequency sending functions. For example, the higher-layer function of the PHY layer may include CRC check, channel decoding, rate de-matching, decoding, demodulation, and layer demapping, and the lower-layer function of the PHY layer may include channel detection, resource demapping, physical antenna demapping, and radio frequency receiving functions. Alternatively, the higher-layer function of the PHY layer may include CRC check, channel decoding, rate de-matching, decoding, demodulation, layer demapping, and channel detection, and the lower-layer function of the PHY layer may include resource demapping, physical antenna demapping, and radio frequency receiving functions.

The RU may communicate with the terminal device by using a radio frequency signal. The CU and the DU may be included in a baseband unit (baseband unit, BBU). An interface between the BBU or the DU and the RU may be referred to as a fronthaul interface.

For example, functions of the CU may be implemented by one entity, or may be implemented by different entities. For example, the functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or the software module and the hardware structure. This is not limited. Different entities may exist in different forms. This is not limited. For example, the DU, the CU, the CU-CP, and the CU-UP are software modules, and the RU is the hardware structure. These modules and methods performed by the modules also fall within the protection scope of this disclosure.

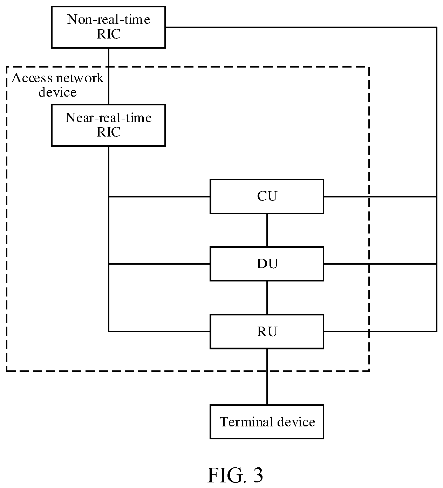

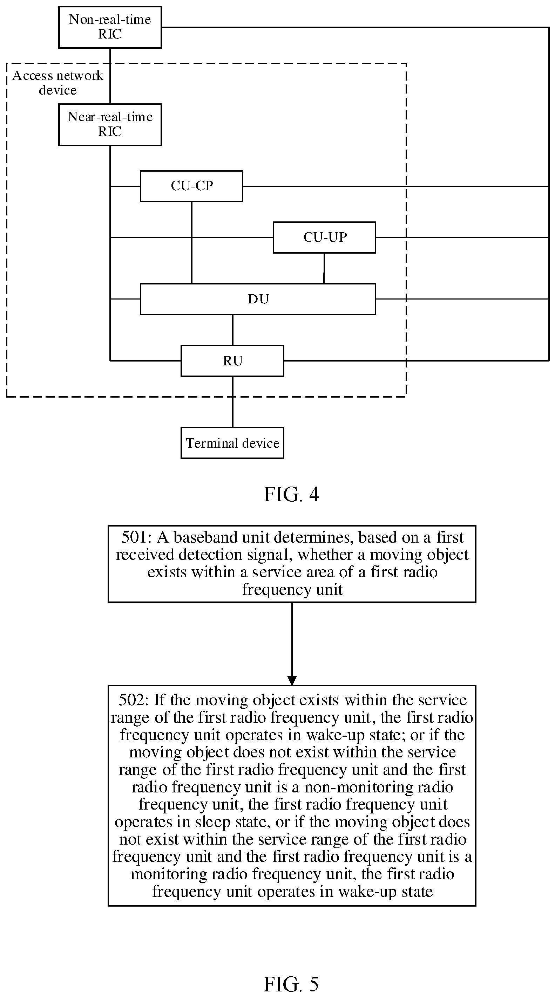

The structure of the access network device includes the CU, the DU, and the RU. As shown in FIG. 3, in a design, an access network device includes a near-real-time access network intelligent controller (RAN intelligent controller, RIC) module, a CU, a DU, an RU, and the like. Optionally, outside the access network device, a non-real-time RIC is further included. An RIC is an intelligent controller of the access network device, and is configured to: collect network information, and perform network optimization and another task. Alternatively, the CU in FIG. 3 is separated into a CU-CP and a CU-UP. As shown in FIG. 4, a structure of an access network device includes a near-real-time RIC, a CU, a DU, an RU, and the like.

In this disclosure, the access network device has a unit for implementing a radio frequency function. For example, when the structure of the access network device includes a baseband unit and a radio frequency unit, the unit is the radio frequency unit. Alternatively, when the structure of the access network device includes the CU, the DU, and the RU, the unit is the RU. For ease of description, the following uses an example in which the unit having the radio frequency function is the radio frequency unit.

In this disclosure, an apparatus configured to implement a function of the radio frequency unit may be a radio frequency unit or an apparatus, for example, a chip system, a hardware circuit, a software module, or the hardware circuit and the software module, that can support the radio frequency unit in implementing the function. The apparatus may be installed in the radio frequency unit or used together with the radio frequency unit. In this disclosure, the chip system may include a chip, or may include a chip and another discrete component. For ease of description, the following describes the technical solutions provided in this disclosure by using an example in which the apparatus configured to implement the function of the radio frequency unit is the radio frequency unit.

In this disclosure, the access network device has a unit for implementing a baseband function. For example, when the structure of the access network device includes the baseband unit and the radio frequency unit, the unit for implementing the baseband function is the baseband unit. Alternatively, when the structure of the access network device includes the CU, the DU, and the RU, the unit for implementing the baseband function is the CU and/or the DU, and the like, for example, a BBU. For ease of description, the following uses an example in which the unit configured to implement the baseband function is the baseband unit.

In this disclosure, an apparatus configured to implement a function of the baseband unit may be a baseband unit or an apparatus, for example, a chip system, a hardware circuit, a software module, or the hardware circuit and the software module, that can support the baseband unit in implementing the function. The apparatus may be installed in the baseband unit or used together with the baseband unit. For ease of description, the following describes the technical solutions provided in this disclosure by using an example in which the apparatus configured to implement the function of the baseband unit is the baseband unit.

In new radio (new radio, NR), a status of a terminal device includes a connected (connected) state, an idle (idle) state, an inactive (Inactive) state, and the like. The connected state may also be referred to as an active (active) state. The idle state is a state in which the terminal device completes camping on a cell but does not perform random access. Usually, after the terminal device is powered on or releases RRC, the terminal device enters the idle state. The idle state corresponds to the connected state. The connected state is a state in which the terminal device completes random access, establishes an RRC connection, and does not release the RRC connection. In the connected state, the terminal device may perform data transmission with the access network device. The inactive state is a state between the connected state and the idle state. In the inactive state, a user plane of an air interface is suspended (suspended), and a user plane bearer and a control plane bearer between a radio access network (radio access network, RAN) and a core network (core network, CN) are maintained. When initiating paging or a service request, the terminal device may activate the user plane bearer of the air interface, and reuse the existing user plane bearer and control plane bearer between the RAN and the CN. In comparison with the idle state, in the inactive state, an NG interface (the NG interface is an interface between the access network and the core network) and a context of the terminal device are reserved. After quickly restoring a connection of the air interface, the terminal device can immediately perform data transmission.

In this disclosure, the access network device includes the baseband unit and the radio frequency unit. The baseband unit determines, based on a detection signal received by the radio frequency unit, whether a moving object exists within a service range of the radio frequency unit. If the moving object exists, it indicates that the moving object exists within the service range of the radio frequency unit, and the radio frequency unit operates in wake-up state; or if the moving object does not exist, the radio frequency unit operates in sleep state. This implements energy saving of the access network device.

In an energy-saving solution, whether a terminal in connected state exists within the service range of the radio frequency unit is determined by measuring reference signal received power (reference signal received power, RSRP) of the radio frequency unit. For example, when the measured RSPR of the radio frequency unit is greater than or equal to a first threshold, it is determined that the terminal in connected state exists within the service range of the radio frequency unit, and the radio frequency unit operates in wake-up state. When the measured RSRP of the radio frequency unit is less than a first threshold, it is determined that no terminal device in connected state exists within the service range of the radio frequency unit, and the radio frequency unit operates in sleep state. A disadvantage is as follows: The terminal device in connected state sends a reference signal to the outside. Therefore, the radio frequency unit determines, by measuring the RSRP, whether the terminal in connected state exists within the service range of the radio frequency unit. Effective detection cannot be implemented on whether a terminal device in idle state and/or inactive state exists within the service range of the radio frequency unit. According to the foregoing solution, a radio frequency unit may be shut down, and operate in sleep state, but a terminal device in idle state and/or inactive state exists within a service range of the radio frequency unit. In this case, service experience of the terminal device is poor.

In addition, for a terminal device in idle state, tracking area code (tracking area code, TAC) of the access network device may be changed, to make the terminal device in idle state initiate a tracking area (tracking area, TA) update process, so that the access network device determines whether the terminal device in idle state exists within a service range of a radio frequency unit. In this solution, only whether a terminal device in idle state exists within the service range of the radio frequency unit is determined. There is no related solution for detection of a terminal device in inactive state.

In this disclosure, whether the moving object exists within the service range of the radio frequency unit is determined based on the detection signal received by the radio frequency unit. When the moving object is a user, regardless of a status of a terminal device of the user, such as a connected state, an inactive state, or an idle state, provided that the user moves, the moving object can be detected in the solution in embodiments of this application. In this way, an energy-saving operation is performed depending on whether the moving object is detected within the service range of the radio frequency unit, to avoid a case in which a service of the radio frequency unit is disabled when a terminal device in idle state and/or inactive state exists within the service range of the radio frequency unit, and improve service experience of the terminal device.

With reference to accompanying drawings, the following describes an energy-saving method provided in this disclosure. As shown in FIG. 5, the method includes the following steps.

An access network device includes a baseband unit and at least one radio frequency unit. A radio frequency unit in the at least one radio frequency unit is referred to as a first radio frequency unit, and the first radio frequency unit operates in wake-up state. In the method in the procedure in FIG. 5, an example in which an energy-saving operation is performed on a first radio frequency unit is used. It may be understood that numerous units in the access network device may perform the procedure in FIG. 5. In the following descriptions, an example in which the procedure in FIG. 5 is performed by the baseband unit is used.

Step 501: The baseband unit determines, based on a first received detection signal, whether a moving object exists within a service range of the first radio frequency unit.

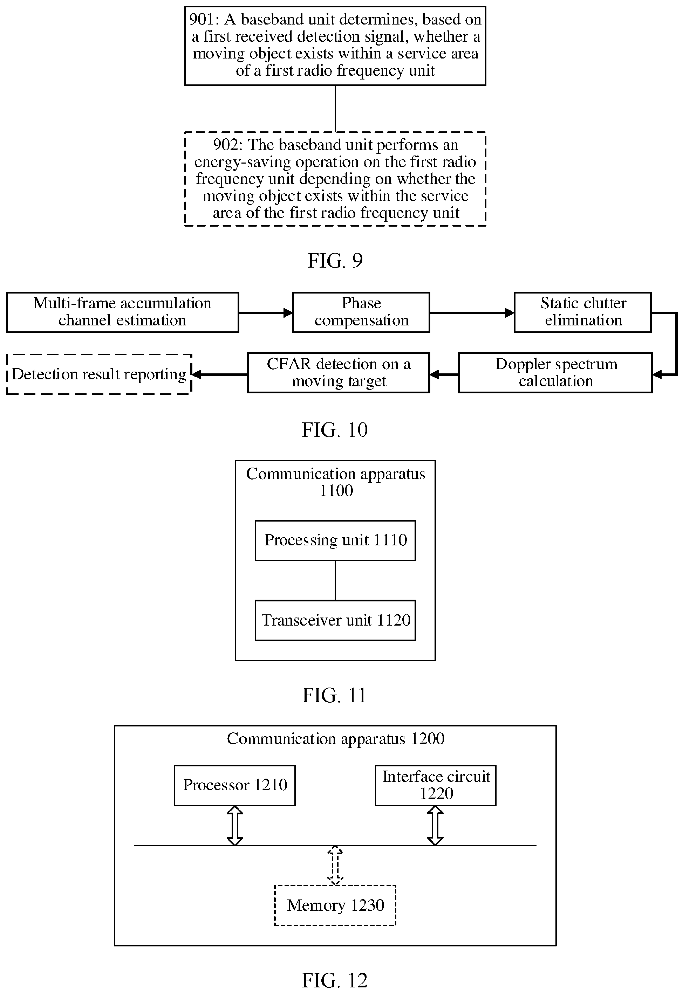

For example, the baseband unit determines, based on the first received detection signal, whether a Doppler shift signal caused by the moving object exists; and if the Doppler shift signal caused by the moving object exists, determines that the moving object exists within the service range of the first radio frequency unit; or if the Doppler shift signal caused by the moving object does not exist, determines that the moving object does not exist within the service range of the first radio frequency unit. For a specific process, refer to descriptions in FIG. 9.

The access network device includes the at least one radio frequency unit. As described above, the radio frequency unit is a unit for implementing a radio frequency function in the access network device. In different structures of the access network device, units for implementing the radio frequency function have different names. In this disclosure, for ease of description, the unit for implementing the radio frequency function is referred to as the radio frequency unit. Manners of determining a first access detection signal are illustratively described.

Manner 1: The first received detection signal is sent by the first radio frequency unit and received by a second radio frequency unit. The first radio frequency unit is different from the second radio frequency unit, and the first radio frequency unit and the second radio frequency unit operate in wake-up state.

For example, the access network device includes the first radio frequency unit and the second radio frequency unit. The first radio frequency unit and the second radio frequency unit may be considered as a combination. The first radio frequency unit sends a detection signal, and the second radio frequency unit receives the detection signal. The detection signal received by the second radio frequency unit is referred to as the first received detection signal. The detection signal may also be referred to as a sensing signal, and the detection signal may be a ZC sequence, a Gray sequence, or the like.

Manner 2: The first received detection signal is sent by a second radio frequency unit and received by the first radio frequency unit. The first radio frequency unit is different from the second radio frequency unit, and the first radio frequency unit and the second radio frequency unit operate in wake-up state.

Same as Manner 1, the access network device includes the first radio frequency unit and the second radio frequency unit, and the two radio frequency units are different radio frequency units. The second radio frequency unit sends a detection signal, and the first radio frequency unit receives the detection signal. The detection signal received by the first radio frequency unit is referred to as the first received detection signal.

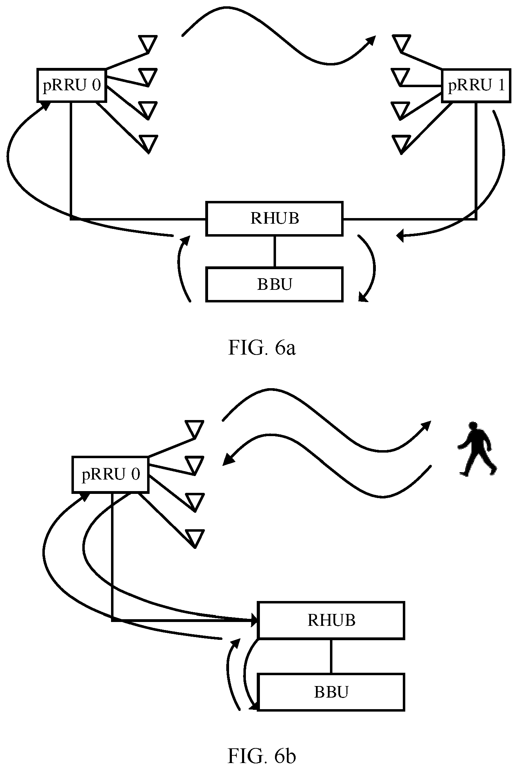

As shown in FIG. 6a, a three-layer architecture of an access network device is used as an example. The access network device includes a BBU, an RHUB, a pRRU 0, and a pRRU 1, and performs the following process in a specified slot.
1. The BBU sends a detection signal to the pRRU 0 through the RHUB.
2. The pRRU 0 is set in transmit state, and transmits the detection signal.
3. The pRRU 1 is set in receive state, receives the detection signal, and forwards the received detection signal to the BBU.
4. The BBU performs radar processing on the received detection signal, determines whether a Doppler shift signal caused by a moving object exists; and if the Doppler shift signal exists, determines that the moving object exists; or if the Doppler shift signal does not exist, determines that the moving object does not exist. For a range of detecting the moving object, refer to FIG. 6a. The range of detecting the moving object may be referred to as a service range of the pRRU 0 and/or a service range of the pRRU 1.

Manner 3: The first received detection signal is sent by a first antenna of the first radio frequency unit, and is received by a second antenna of the first radio frequency unit.

The first radio frequency unit is connected to the first antenna and the second antenna. The first antenna sends a detection signal, and the second antenna receives the detection signal. The detection signal received by the second antenna is referred to as the first received detection signal. The first radio frequency unit operates in wake-up state.

As shown in FIG. 6b, a three-layer architecture of an access network device is used as an example. The access network device includes a BBU, an RHUB, and a pRRU 0, and performs the following process in a specified slot.
1. The BBU sends a detection signal to the pRRU 0 through the PHUB.
2. An antenna 0 of the pRRU 0 is set in transmit state, and transmits the detection signal.
3. An antenna 1 of the pRRU 0 is set in receive state, receives the detection signal, and forwards the received detection signal to the BBU.
4. The BBU performs radar processing on the received detection signal, and determines whether a moving object exists. In this process, for a range of detecting the moving object, refer to FIG. 6b. The range of detecting the moving object is also referred to as a service range of the pRRU 0.

It may be understood that in Manner 1, specifically, an antenna connected to the second radio frequency unit sends the detection signal, and an antenna connected to the first radio frequency unit receives the detection signal. In Manner 2, specifically, an antenna connected to the first radio frequency unit sends the detection signal, and an antenna connected to the second radio frequency unit receives the detection signal.

Step 502: If the moving object exists within the service range of the first radio frequency unit, the first radio frequency unit operates in wake-up state; or if the moving object does not exist within the service range of the first radio frequency unit and the first radio frequency unit is a non-monitoring radio frequency unit, the first radio frequency unit operates in sleep state, or if the moving object does not exist within the service range of the first radio frequency unit and the first radio frequency unit is a monitoring radio frequency unit, the first radio frequency unit operates in wake-up state.

The monitoring radio frequency unit operates in wake-up state in an initial phase of a first period of time, and the non-monitoring radio frequency unit operates in sleep state in the initial phase of the first period of time. Optionally, the sleep state is also referred to as an energy-saving state, and the wake-up state is also referred to as a service detecting state or a service sensing state. The monitoring radio frequency unit and non-monitoring radio frequency unit are described as follows.
1. The monitoring radio frequency unit and the non-monitoring radio frequency unit are fixed and unchanged.

For example, before delivery of the access network device, a manufacturer configures which radio frequency unit in the access network device is the monitoring radio frequency unit and which radio frequency unit is the non-monitoring radio frequency unit. The monitoring radio frequency unit always operates in wake-up state. The non-monitoring radio frequency unit operates in sleep state when the access network device is started or restarted, and the non-monitoring radio frequency unit is woken up subsequently as required and operates in wake-up state. For example, when the moving object is detected within a service range of the non-monitoring radio frequency unit, the non-monitoring radio frequency unit is woken up, and the non-monitoring radio frequency unit operates in wake-up state. After a period of time, if the moving object is not detected within the service range of the non-monitoring radio frequency unit, the non-monitoring radio frequency unit that is woken up may be shut down, and the non-monitoring radio frequency unit switches to the sleep state again. That is, in this design, the monitoring radio frequency unit always operates in wake-up state. The non-monitoring radio frequency unit operates in sleep state in the initial phase. Subsequently, an operating status of the non-monitoring radio frequency unit may be adjusted depending on whether the moving object is detected within the service range of the non-monitoring radio frequency unit.

**In** this design, the foregoing "first period of time" may be permanent time. The monitoring radio frequency unit always operates in wake-up state, and the non-monitoring radio frequency unit operates in sleep state in the initial phase of operating.

2. The monitoring radio frequency unit and the non-monitoring radio frequency unit are configurable.

The monitoring radio frequency unit and the non-monitoring radio frequency unit in the access network device are not fixed, and the monitoring radio frequency unit and the non-monitoring radio frequency unit in the access network device may be configured. For example, the monitoring radio frequency unit and the non-monitoring radio frequency unit in the access network device are configured based on an application scenario, a requirement, or the like of the access network device. Alternatively, the monitoring radio frequency unit and the non-monitoring radio frequency unit in the access network device may be configured at an interval of a period of time, or referred to as "periodically", and the like.

**In** this design, the monitoring radio frequency unit and the non-monitoring radio frequency unit may be configured before the delivery of the access network device. **In** a process in which the access network device is used, the monitoring radio frequency unit and the non-monitoring radio frequency unit that are configured before the delivery may be changed. Alternatively, the monitoring radio frequency unit and the non-monitoring radio frequency unit are not configured before the delivery of the access network device. A user configures the monitoring radio frequency unit and the non-monitoring radio frequency unit in the access network device, and the like.

**In** this design, the foregoing "first period of time" may refer to a period of time in which the monitoring radio frequency unit and the non-monitoring radio frequency unit are configured twice. During each configuration, an operating status of the monitoring radio frequency unit is set to operate in wake-up state. An initial operating status of the non-monitoring radio frequency unit is set to the sleep state.

Optionally, in this disclosure, a timer may be set for the first radio frequency unit in the access network device, and the first radio frequency unit is the monitoring radio frequency unit or the non-monitoring radio frequency unit. During running of the timer of the first radio frequency unit, the first radio frequency unit operates in wake-up state. After the timer of the first radio frequency unit expires, if the first radio frequency unit is the non-monitoring radio frequency unit, the first radio frequency unit switches to the sleep state. Therefore, in this disclosure, when the moving object is detected within the service range of the first radio frequency unit, the timer of the first radio frequency unit needs to be restarted. That the first radio frequency unit switches to the sleep state when the moving object is not detected within the service range of the first radio frequency unit operating in wake-up state is specifically: After the timer of the first radio frequency unit expires, the first radio frequency unit operates in sleep state.

Optionally, when it is determined that the first radio frequency unit operates in wake-up state, a neighboring radio frequency unit of the first radio frequency unit is also woken up. The purpose of such an operation is mainly as follows: The user is moving, and when it is determined that a user or the moving object exists within the service range of the first radio frequency unit, it is probably that the user moves to a service range of the neighboring radio frequency unit of the first radio frequency unit, and therefore, the neighboring radio frequency unit is also woken up, to improve service experience of the user. For example, in an implementation, when the first radio frequency unit is woken up, a radio frequency unit in sleep state in the neighboring radio frequency unit of the first radio frequency unit further needs to be woken up. A timer of the woken-up neighboring radio frequency unit is restarted. During running of the timer of the neighboring radio frequency unit, the neighboring radio frequency unit operates in wake-up state.

In this disclosure, based on the procedure in FIG. 5, whether the moving object exists within the service range of the first radio frequency unit is determined, and corresponding energy-saving policies are executed depending on whether the moving object exists within the service range of the first radio frequency unit. Alternatively, it may be first determined whether a terminal device in connected state exists within the service range of the first radio frequency unit. If the terminal device in connected state does not exist within the service range of the first radio frequency unit, the procedure in FIG. 5 is then executed. In other words, in the procedure in FIG. 5, no terminal device in connected state exists within the service range of the first radio frequency unit. A manner of determining whether the terminal device in connected state exists within the service range of the first radio frequency unit is not limited. For example, it is determined whether RSRP detected by the first radio frequency unit is greater than or equal to (or greater than) a first threshold. If the RSRP is greater than or equal to (or greater than) the first threshold, it is determined that the terminal device in connected state exists within the service range of the first radio frequency unit. If the RSRP is less than (or less than or equal to) the first threshold, it is determined that no terminal device in connected state exists within the service range of the first radio frequency unit.

For example, the access network device includes N radio frequency units, the N radio frequency units are numbered from 0 to N-1 sequentially, and the N radio frequency units include the monitoring radio frequency unit and the non-monitoring radio frequency unit. The monitoring radio frequency unit operates in wake-up state, and the non-monitoring radio frequency unit operates in sleep state in the initial phase. The monitoring radio frequency unit may be considered as a "sentinel", and the non-monitoring radio frequency unit is woken up as required depending on whether a moving object enters the service range of the monitoring radio frequency unit, to implement energy saving of the access network device. A radio frequency unit that is woken up may be the monitoring radio frequency unit or the non-monitoring radio frequency unit. Timers may be set for both the monitoring radio frequency unit and the non-monitoring radio frequency unit, and the following uses this example for description. Alternatively, a timer may be set for the non-monitoring radio frequency unit, and no timer may be set for the monitoring radio frequency unit, and the monitoring radio frequency unit operates in wake-up state. When a radio frequency unit is woken up, a timer of the radio frequency unit is restarted. During running of the timer, a corresponding radio frequency unit operates in wake-up state. After the timer expires, the corresponding radio frequency unit switches to a sleep state.

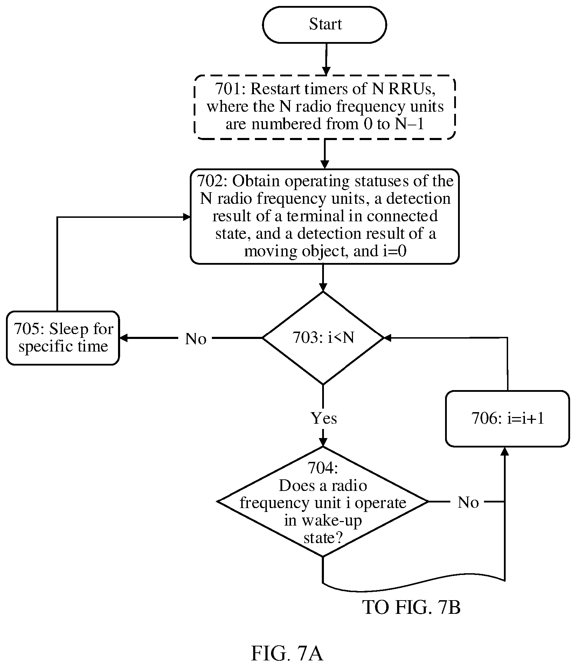

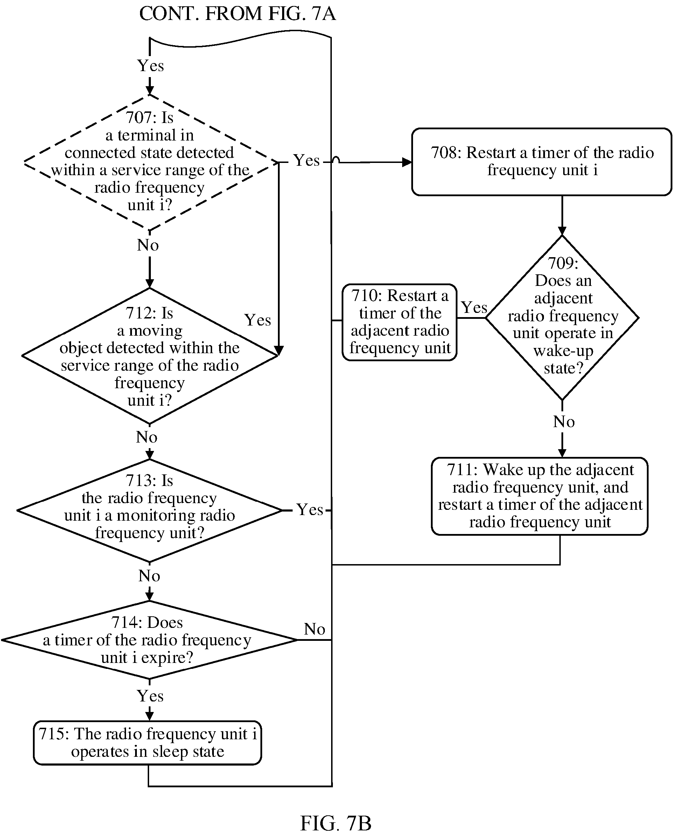

The following describes the energy-saving method in the foregoing scenario with reference to an accompanying drawing. As shown in FIG. 7A and FIG. 7B, the following steps are included at least.

Step 701: Start/Restart timers of N radio frequency units, where the N radio frequency units are numbered from 0 to N-1.

Step 701 is optional. For example, step 701 may be performed in a phase in which an access network device is powered on or restarted. In this disclosure, an energy-saving operation is periodically performed on the N radio frequency units. For example, the following step 702 to step 715 are performed in first time, and the energy-saving operation is performed on non-monitoring radio frequency units in the N radio frequency units as required. After sleep for a period of time, the following step 702 to step 715 are then performed in second time, and the energy-saving operation is performed on the non-monitoring radio frequency units in the N radio frequency units as required.

Step 702: Obtain operating statuses of the N radio frequency units, a detection result of a terminal device in connected state, and a detection result of a moving object, and set a value of i to 0.

The operating status of the radio frequency unit specifically refers to that the radio frequency unit operates in wake-up state or a sleep state. The detection result of the terminal device in connected state refers to whether the terminal device in connected state is detected within a service range of a radio frequency unit. The detection result of the moving object refers to whether the moving object is detected within the service range of the radio frequency unit.

Step 703: Determine whether the value of i is less than N; and if the value of i is less than N, perform step 704; or if the value of i is not less than N, perform step 705 of sleeping for specific time, and then perform step 702.

Step 704: Determine whether a radio frequency unit i operates in wake-up state; and if the radio frequency unit i operates in wake-up state, perform step 707; or if the radio frequency unit i does not operate in wake-up state, perform step 706.

Step 706: Set i=i+1.

Step 707: Determine whether the terminal device in connected state is detected within a service range of the radio frequency unit i; and if the terminal device in connected state is detected, perform step 708; or if the terminal device in connected state is not detected, perform step 712.

Step 707 is optional. For example, in the procedure in FIG. 7A and FIG. 7B, step 707 may not be performed. For example, in step 704, if it is determined that the radio frequency unit i operates in wake-up state, step 712 is directly performed, that is, whether a moving object is detected within the service range of the radio frequency unit i is determined. When the moving object is a user, a status of a terminal device of the user may be a connected state, an idle state, or an inactive state. In other words, in step 712, whether a terminal device exists within the service range of the radio frequency unit i may be determined, that is, whether the terminal device in connected state exists within the service range of the radio frequency unit i may be determined. Therefore, step 707 may not be performed. Alternatively, in the procedure in FIG. 7A and FIG. 7B, step 707 may be performed. For example, in step 704, if it is determined that the radio frequency unit i operates in wake-up state, step 707 is performed, that is, whether the terminal in connected state exists within the service range of the radio frequency unit i is determined. If the terminal in connected state is not detected, step 712 is performed, that is, whether the moving object is detected within the service range of the radio frequency unit i is determined.

Step 708: Restart a timer of the radio frequency unit i.

Step 709: Determine whether a neighboring radio frequency unit of the radio frequency unit i operates in wake-up state; and if the neighboring radio frequency unit operates in wake-up state, perform step 710 of restarting a timer of the neighboring radio frequency unit; or if the neighboring radio frequency unit operates in sleep state, perform step 711 of waking up the neighboring radio frequency unit, and restarting a timer of the neighboring radio frequency unit.

Step 712: Determine whether the moving object is detected within the service range of the radio frequency unit i; and if the moving object is detected, perform step 708; or if the moving object is not detected, perform step 713.

Step 713: Determine whether the radio frequency unit i is a monitoring radio frequency unit; and if the radio frequency unit i is the monitoring radio frequency unit, perform step 706; or if the radio frequency unit i is not the monitoring radio frequency unit, perform step 714.

Step 714: Determine whether the timer of the radio frequency unit i expires; and if the timer expires, perform step 715; or if the timer does not expire, perform step 706 to continue to perform an energy-saving operation on a radio frequency unit (i+1).

Step 715: Switch an operating status of the radio frequency unit i to the sleep state, and the radio frequency unit i operates in sleep state.

In this disclosure, the non-monitoring radio frequency unit is woken up as required based on a detection result of the radio frequency unit. For example, the non-monitoring radio frequency unit is woken up only when a terminal device in connected state or a moving object exists in the non-monitoring radio frequency unit; or when no terminal device in connected state or the moving object does not exist in the non-monitoring radio frequency unit, the non-monitoring radio frequency unit operates in sleep state. This implements energy saving of the access network device.

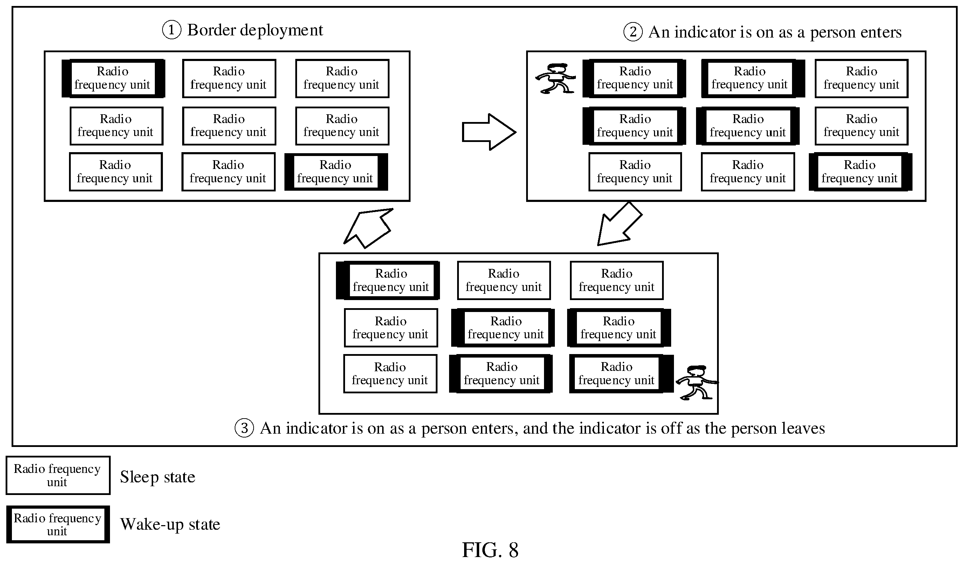

As shown in FIG. 8, an access network device includes nine radio frequency units. The nine radio frequency units include two monitoring radio frequency units and seven non-monitoring radio frequency units. The two monitoring radio frequency units operate in wake-up state, and the seven non-monitoring radio frequency units operate in sleep state in an initial phase. The seven non-monitoring radio frequency units are woken up as required. For distribution of the two monitoring radio frequency units and the seven non-monitoring radio frequency units, refer to FIG. 8.

In the initial phase, refer to a first diagram in FIG. 8, and the two monitoring radio frequency units operate in wake-up state. When a moving object is detected within a service range of at least one monitoring radio frequency unit in the two monitoring radio frequency units, a neighboring non-monitoring radio frequency unit of the monitoring radio frequency unit is woken up.

In a second diagram in FIG. 8, an example in which a monitoring radio frequency unit in an upper left corner detects a moving object, and a neighboring radio frequency unit of the monitoring radio frequency unit in the upper left corner is woken up is used.

When the radio frequency unit operates in wake-up state, an indicator of the radio frequency unit is on. When the radio frequency unit operates in sleep state, an indicator of the radio frequency unit is off. Therefore, in this disclosure, when a user moves to a service range of a radio frequency unit or the vicinity of a radio frequency unit, an indicator of the radio frequency unit is on. In addition, when the radio frequency unit is woken up, a timer is set. After the timer expires, the radio frequency unit switches to the sleep state again. To be specific, when the user moves out of the service range of the radio frequency unit or the vicinity of the radio frequency unit, the indicator of the radio frequency unit is off again after being on for a period of time. Therefore, in this disclosure, as the user enters, the indicator of the non-monitoring radio frequency unit may be on, and the non-monitoring radio frequency unit operates in wake-up state. When the user leaves, the non-monitoring radio frequency unit switches to the sleep state, and the indicator is off. Therefore, "an indicator is on as a person enters, and the indicator is off as the person leaves".

In a third diagram of FIG. 8, the non-monitoring radio frequency unit that is woken up in the second diagram switches to the sleep state as the user leaves, the timer expires, and the like, and the indicator of the non-monitoring radio frequency unit that is woken up in the second diagram is off. In addition, as the user moves, the user moves to a monitoring radio frequency unit in a lower right corner. The monitoring radio frequency unit detects that a moving object exists within a service range of the monitoring radio frequency unit, and a neighboring radio frequency unit of the monitoring radio frequency unit in the lower right corner is woken up. When the user leaves a service range of the access network, an operating status of the radio frequency unit of the access network device is switched to the first diagram in FIG. 8.

In this disclosure, dedicated hardware does not need to be purchased, and hardware of the access network device does not need to be changed. Without affecting communication of the access network device, energy saving of the access network device is implemented. In addition, the non-monitoring radio frequency unit in the access network device is woken up as required, and adaptively saves energy, to implement maximum energy saving of the access network device.

In this disclosure, radar detection is introduced into a wireless communication system, and an object (for example, a terminal device) in the wireless communication system is positioned and the like through the radar detection. An example in which the access network device detects a moving object through radar detection is used. This disclosure provides a moving object detection method. As shown in FIG. 9, the method includes the following steps.

An access network device includes a baseband unit, and an example in which the baseband unit detects a moving object is used. It may be understood that numerous units in the access network device can detect the moving object. The following is merely example descriptions, and is not intended to limit this disclosure.

Step 901: The baseband unit determines, based on a first received detection signal, whether a moving object exists within a service range of a first radio frequency unit.

For a process in which the baseband unit determines the first received detection signal, refer to FIG. 5. For example, the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

An implementation process of step 901 may include: determining, based on the first received detection signal, whether a Doppler shift signal caused by the moving object exists; and if the Doppler shift signal caused by the moving object exists, determining that the moving object exists within the service range of the first radio frequency unit; or if the Doppler shift signal caused by the moving object does not exist, determining that the moving object does not exist within the service range of the first radio frequency unit.

A processing process of step 901 may be referred to as radar processing. An implementation of the radar processing is not limited. For the following example descriptions, refer to FIG. 10. A radar processing process is as follows.
1. Perform multi-frame accumulation channel estimation. For example, channel estimation is performed on the first received detection signal, to obtain a vector. Each received detection signal is sent in a corresponding frame. A multi-frame accumulation process is to sort, in a time sequence, channel estimation results obtained in a plurality of frames, and combine the channel estimation results in the plurality of frames into a matrix.
2. Perform phase compensation. A phase compensation process is to compensate for phase noises, and supplement initial phases of different frame channel estimation results.
3. Perform static clutter elimination. In a process of the static clutter elimination, a filter is used to filter clutter.
4. Perform Doppler calculation. In a process of the Doppler calculation, discrete Fourier transform can be used to obtain a range-Doppler spectrum through calculation.
5. Perform constant false-alarm rate (constant false-alarm rate, CFAR) detection on a moving target. A CFAR detection algorithm is for searching for a target signal on range Doppler, and the target signal may be a Doppler shift signal. If the Doppler shift signal is found, a detection result is that the Doppler shift signal caused by the moving object exists; or if the Doppler shift signal is not found, a detection result is that no Doppler shift signal caused by the moving object exists.
6. Perform detection result reporting. The detection result is reported to a corresponding unit. A step of the detection result reporting is optional, and may be performed. For example, if another unit needs to perform a corresponding operation based on the detection result, the detection result may be reported to the corresponding unit. Alternatively, a step of the detection result reporting may not be performed. For example, a baseband unit performs the foregoing steps 1 to 5, to obtain the detection result. Subsequently, the baseband unit performs an energy-saving operation on a radio frequency unit by directly using the detection result. A base station unit directly uses the detection result, and does not need to report the detection result to another unit, and the step of the detection result reporting is not performed.

Step 902: The baseband unit performs an energy-saving operation on the first radio frequency unit depending on whether the moving object exists within the service range of the first radio frequency unit.

For a process of performing the energy-saving operation, refer to the descriptions in FIG. 5. For example, the first radio frequency unit is a non-monitoring radio frequency unit, and when the moving object does not exist within the service range of the first radio frequency unit, the first radio frequency unit operates in sleep state.

Step 902 is optional, and may be or may not be performed. This is not limited. For example, an objective of this disclosure is to detect whether the moving object exists within the service range of the radio frequency unit. No step needs to be performed any more, and step 902 may not be performed. Alternatively, the energy-saving operation is performed depending on whether the moving object exists within the service range of the radio frequency unit, and step 902 is performed. Alternatively, another operation may be performed depending on whether the moving object exists within the service range of the radio frequency unit, and step 902 is not performed.

According to the foregoing design, whether the moving object exists within the service range of the radio frequency unit can be detected, and further, a terminal in connected state, idle state, or inactive state can be effectively detected.

It may be understood that to implement functions in the foregoing methods, the baseband unit includes corresponding hardware structures and/or software modules for performing the functions. A person skilled in the art is easily aware that with reference to units and method steps in the examples described in this disclosure, this disclosure can be implemented by hardware or a combination of hardware and computer software. Whether a function is performed by hardware or hardware driven by computer software depends on particular application scenarios and design constraints of the technical solutions.

FIG. 11 and FIG. 12 are diagrams of structures of possible apparatuses according to this disclosure. The apparatuses may implement functions of the baseband unit in the foregoing method embodiments, and therefore may implement the beneficial effects of the foregoing methods.

As shown in FIG. 11, an apparatus 1100 includes a processing unit 1110 and a transceiver unit 1120. The apparatus 1100 is configured to implement functions of the baseband unit in the foregoing methods.

When the apparatus 1100 is configured to implement a function of the baseband unit in FIG. 5, the transceiver unit 1120 is configured to receive a first received detection signal from a radio frequency unit; and the processing unit 1110 is configured to determine, based on the first received detection signal, whether a moving object exists within a service range of a first radio frequency unit. If the moving object exists within the service range of the first radio frequency unit, the first radio frequency unit operates in wake-up state; or if the moving object does not exist within the service range of the first radio frequency unit and the first radio frequency unit is a non-monitoring radio frequency unit, the first radio frequency unit operates in sleep state; or if the moving object does not exist within the service range of the first radio frequency unit and the first radio frequency unit is a monitoring radio frequency unit, the first radio frequency unit operates in wake-up state. The monitoring radio frequency unit operates in wake-up state in an initial phase of a first period of time, and the non-monitoring radio frequency unit operates in sleep state in the initial phase of the first period of time.

In a design, when the first radio frequency unit operates in wake-up state, the processing unit 1110 starts or restarts a timer of the first radio frequency unit; and for the processing unit 1110, during running of the timer of the first radio frequency unit, the first radio frequency unit operates in wake-up state.

In a design, when the first radio frequency unit operates in wake-up state, the processing unit 1110 wakes up a radio frequency unit in sleep state in a neighboring radio frequency unit of the first radio frequency unit; and starts or restarts a timer of the woken-up neighboring radio frequency unit, where during running of the timer of the neighboring radio frequency unit, the neighboring radio frequency unit operates in wake-up state.

In a design, when the first radio frequency unit operates in sleep state, for the processing unit 1110, after the timer of the first radio frequency unit expires, the first radio frequency unit operates in sleep state.

In a design, the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

In a design, when determining, based on the first received detection signal, whether the moving object exists within the service range of a first radio frequency unit, the processing unit 1110 is specifically configured to: determine, based on the first received detection signal, whether a Doppler shift signal caused by the moving object exists; and if the Doppler shift signal caused by the moving object exists, determine that the moving object exists within the service range of the first radio frequency unit; or if the Doppler shift signal caused by the moving object does not exist, determine that the moving object does not exist within the service range of the first radio frequency unit.

In a design, no terminal device in connected state exists within the service range of the first radio frequency unit.

When the apparatus 1100 is configured to implement a function of the baseband unit in FIG. 9, the transceiver unit 1120 is configured to receive a first received detection signal from a radio frequency unit; and the processing unit 1110 is configured to determine, based on the first received detection signal, whether a moving object exists within a service range of a first radio frequency unit, where the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

In a design, when determining, based on the first received detection signal, whether the moving object exists within the service range of a first radio frequency unit, the processing unit 1110 is specifically configured to: determine, based on the first received detection signal, whether a Doppler shift signal caused by the moving object exists; and if the Doppler shift signal caused by the moving object exists, determine that the moving object exists within the service range of the first radio frequency unit; or if the Doppler shift signal caused by the moving object does not exist, determine that the moving object does not exist within the service range of the first radio frequency unit.

For more detailed descriptions of the processing unit 1110 and the transceiver unit 1120, refer to the related descriptions in the foregoing method embodiments. Details are not described again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver, an input/output interface, a pin, or the like. Optionally, the communication apparatus 1200 may further include a memory 1230, configured to: store instructions executed by the processor 1210, or store input data required by the processor 1210 to run the instructions, or store data generated after the processor 1210 runs the instructions.

When the communication apparatus 1200 is configured to implement the method shown in FIG. 5 or FIG. 9, the processor 1210 is configured to implement a function of the foregoing processing unit 1110, and the interface circuit 1220 is configured to implement a function of the foregoing transceiver unit 1120.

When the communication apparatus is a module used in a baseband unit, the module in the baseband unit implements functions of the baseband unit in the foregoing method embodiments. The module in the baseband unit receives information from another module (such as a radio frequency module or an antenna) in the baseband unit, where the information is sent by the radio frequency module to the baseband unit. Alternatively, the module in the baseband unit sends information to another module (such as a radio frequency module or an antenna) in the baseband unit, where the information is sent by the baseband unit to the radio frequency unit. The module in the baseband unit herein may be a baseband chip in the baseband unit, or may be a DU or another module. The DU herein may be a DU in an open radio access network (open radio access network, O-RAN) architecture.

This disclosure provides a system, including a first apparatus and a second apparatus. The first apparatus is configured to implement a function of the baseband unit in FIG. 5 or FIG. 9, and the second apparatus is configured to implement a function of a radio frequency unit.

It may be understood that the processor in this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory in this disclosure may be a random access memory, a flash memory, a read-only memory, a programmable read-only memory, an erasable programmable read-only memory, an electrically erasable programmable read-only memory, a register, a hard disk drive, a removable hard disk drive, a CD-ROM, or a storage medium of any other form well-known in the art.

In an example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

The methods in this disclosure may be wholly or partially implemented by using software, hardware, firmware, or any combination thereof. When the software is used to implement the methods, all or a part of the methods may be implemented in a form of a computer program product. The computer program product includes one or more computer programs or instructions. When the computer programs or the instructions are loaded and executed on a computer, the procedures or the functions in this disclosure are all or partially executed. The computer may be a general-purpose computer, a dedicated computer, a computer network, a network device, user equipment, a core network device, a BBU, an RRU, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In this disclosure, unless otherwise stated or there is a logic conflict, terms and/or descriptions in different embodiments are consistent and may be mutually referenced, and technical features in different embodiments may be combined based on an internal logical relationship thereof, to form a new embodiment.

In this disclosure, "at least one" means one or more, and "a plurality of" means two or more than two. "And/or" describes an association relationship between associated objects, and indicates that three relationships may exist. For example, A and/or B may indicate the following cases: Only A exists, both A and B exist, and only B exists, where A and B may be singular or plural. In the text descriptions of this disclosure, the character "/" generally indicates an "or" relationship between the associated objects. In a formula in this disclosure, the character "/" indicates a "division" relationship between the associated objects. "Including at least one of A, B, or C" may indicate: including A; including B; including C; including A and B; including A and C; including B and C; and including A, B, and C.

It may be understood that various numbers used in this disclosure are merely differentiated for ease of description, but are not used to limit the scope of this disclosure. Sequence numbers of the foregoing processes do not mean execution sequences. The execution sequences of the processes should be determined based on functions and internal logic of the processes.

## Claims

1. An energy-saving method, wherein the method is applied to a baseband unit and comprises:
determining, based on a first received detection signal, whether a moving object exists within a service range of a first radio frequency unit, wherein
if the moving object exists within the service range of the first radio frequency unit, the first radio frequency unit operates in wake-up state; or
if the moving object does not exist within the service range of the first radio frequency unit and the first radio frequency unit is a non-monitoring radio frequency unit, the first radio frequency unit operates in sleep state; or if the moving object does not exist within the service range of the first radio frequency unit and the first radio frequency unit is a monitoring radio frequency unit, the first radio frequency unit operates in wake-up state, wherein
the monitoring radio frequency unit operates in wake-up state in an initial phase of a first period of time, and the non-monitoring radio frequency unit operates in sleep state in the initial phase of the first period of time.

2. The method according to claim 1, wherein that the first radio frequency unit operates in wake-up state comprises:
starting or restarting a timer of the first radio frequency unit, wherein
during running of the timer of the first radio frequency unit, the first radio frequency unit operates in wake-up state.

3. The method according to claim 1 or 2, wherein when the first radio frequency unit operates in wake-up state, the method further comprises:
waking up a radio frequency unit in sleep state in a neighboring radio frequency unit of the first radio frequency unit; and
starting or restarting a timer of the woken-up neighboring radio frequency unit, wherein
during running of the timer of the neighboring radio frequency unit, the neighboring radio frequency unit operates in wake-up state.

4. The method according to any one of claims 1 to 3, wherein that the first radio frequency unit operates in sleep state comprises:
after the timer of the first radio frequency unit expires, the first radio frequency unit operates in sleep state.

5. The method according to any one of claims 1 to 4, wherein the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

6. The method according to any one of claims 1 to 5, wherein the determining, based on a first received detection signal, whether a moving object exists within a service range of a first radio frequency unit comprises:
determining, based on the first received detection signal, whether a Doppler shift signal caused by the moving object exists; and
if the Doppler shift signal caused by the moving object exists, determining that the moving object exists within the service range of the first radio frequency unit; or
if the Doppler shift signal caused by the moving object does not exist, determining that the moving object does not exist within the service range of the first radio frequency unit.

7. The method according to any one of claims 1 to 6, wherein no terminal device in connected state exists within the service range of the first radio frequency unit.

8. A moving object detection method, wherein the method is applied to a baseband processing unit and comprises:
determining, based on a first received detection signal, whether a moving object exists within a service range of a first radio frequency unit, wherein
the first received detection signal is sent by the first radio frequency unit and received by a second radio frequency unit; the first received detection signal is sent by a second radio frequency unit and received by the first radio frequency unit; or the first received detection signal is sent by a first antenna of the first radio frequency unit and received by a second antenna of the first radio frequency unit.

9. The method according to claim 8, wherein the determining, based on a first received detection signal, whether a moving object exists within a service range of a first radio frequency unit comprises:
determining, based on the first received detection signal, whether a Doppler shift signal caused by the moving object exists; and
if the Doppler shift signal caused by the moving object exists, determining that the moving object exists within the service range of the first radio frequency unit; or
if the Doppler shift signal caused by the moving object does not exist, determining that the moving object does not exist within the service range of the first radio frequency unit.

10. An apparatus, comprising a unit configured to implement the method according to any one of claims 1 to 7 or a unit configured to implement the method according to claim 8 or 9.

11. An apparatus, comprising a processor and a memory, wherein the processor is configured to implement the method according to any one of claims 1 to 7 or the method according to claim 8 or 9.

12. An apparatus, comprising a processor and an interface circuit, wherein the interface circuit is configured to: receive a signal from an apparatus other than the apparatus and transmit the signal to the processor, or send a signal from the processor to an apparatus other than the apparatus, and the processor is configured to implement the method according to any one of claims 1 to 7 or the method according to claim 8 or 9 through a logic circuit or by executing code instructions.

13. A computer-readable storage medium, wherein the computer-readable storage medium stores instructions, and when the instructions are run on a computer, the computer is enabled to perform the method according to any one of claims 1 to 7 or the method according to claim 8 or 9.

14. A computer program product, comprising instructions, wherein when the instructions are run on a computer, the computer is enabled to perform the method according to any one of claims 1 to 7 or the method according to claim 8 or 9.

15. A chip, comprising a processor, wherein the processor is coupled to a memory, and is configured to execute a computer program or instructions stored in the memory, to enable the chip to implement the method according to any one of claims 1 to 7 or the method according to claim 8 or 9.

16. A system, comprising: a first apparatus and a second apparatus, wherein
the first apparatus is configured to implement the method according to any one of claims 1 to 7 or the method according to claim 8 or 9; and
the second apparatus is configured to implement a function of a radio frequency unit.
